# EUROPEAN PATENT SPECIFICATION

(11) **EP 3 832 828 B1**
(45) Date of publication and mention of the grant of the patent: **10.05.2023**
(21) Application number: 19212874.2
(22) Date of filing: 02.12.2019
(51) Int. Cl.: H02J 3/00, H02J 3/02

(54) **POWER SUPPLY GRID SYSTEM**
STROMVERSORGUNGSNETZSYSTEM
SYSTÈME DE RÉSEAU D'ALIMENTATION ÉLECTRIQUE

(43) Date of publication of application: 09.06.2021
(73) Proprietor: TenneT TSO GmbH, 95448 Bayreuth (DE)
(72) Inventor: Lebioda, Thomas Jan, 95445 Bayreuth (DE); Wolf, Matthias, 95444 Bayreuth (DE); Michelsen, Sönke, 31275 Lehrte (DE); Wehling, Frank, 30177 Hannover (DE)
(74) Representative: Scheffler, Jörg

(56) References cited:
- US-A1- 2012 181 853
- US-A1- 2018 097 361
- US-A1- 2018 212 420
- US-A1- 2019 319 456

## Description

The present invention relates to a power supply grid system and a terminal for the power supply grid system.

### Background of the invention

AC power supply grid systems are well-known in the art and form the backbone of today's power supply systems. The power supply grid systems comprise a number of AC transmission lines to which a number of terminals are connected. Energy is transmitted from one terminal via a transmission line or part of a transmission line to another terminal. DC Transmission grid are also known can are used for industrial applications or for train grid systems. In view of the increasing amount of energy that needs to be transmitted via the grid systems, the efficiency of the grid systems must be improved.

Document US 2012/181853 A1 relates to electrical power distribution, and more particularly, to a circuit that automatically distributes alternating current (AC) and direct current (DC) power in a building.

### Summary of the invention

It is an object of the invention to provide an improved power supply grid system which can transmit more energy over the existing infrastructure as well as terminals required for the power supply grid system. It is a further object to allow seamless change in the power transmission to improve the power transmission over the existing infrastructure.

This object is solved by a power supply grid system according to claim 1, a terminal for a power supply grid system according to claim 6, and a method of controlling a power supply grid system according to claim 8.

Further aspects of the invention are subject to the dependent claims.

Aspects and advantages of the present invention will now be described with reference to the figures.
- Fig. 1: discloses a schematic block diagram of a power supply grid system according to the invention,
- Fig. 2: discloses a schematic block diagram of a power supply grid system according to the invention,
- Fig. 3: shows a further schematic representation of a power supply grid system according to the invention,
- Fig. 4: shows a further schematic representation of a power supply grid system according to the invention,
- Fig. 5: shows a block diagram of a substation of a power supply grid system according to the invention,
- Fig. 6: shows a block diagram of a substation of a power supply grid system according to the invention,
- Fig. 7: shows a schematic representation of a power supply grid system according to the invention,
- Fig. 8: shows a schematic representation of the power supply grid system according to the invention,
- Fig. 9: shows a further schematic representation of the power supply grid system in an AC operating mode according to the invention,
- Fig. 10: shows a schematic representation of a power supply grid system in a DC operating mode according to the invention,
- Fig. 11: shows a schematic representation of a power supply grid system in a combined AC and DC operating mode according to the invention,
- Fig. 12: shows a schematic representation of a power supply grid system in a combined AC and DC operating mode according to the invention, and
- Fig. 13: shows a schematic representation of a control of a power supply grid system according to the invention.

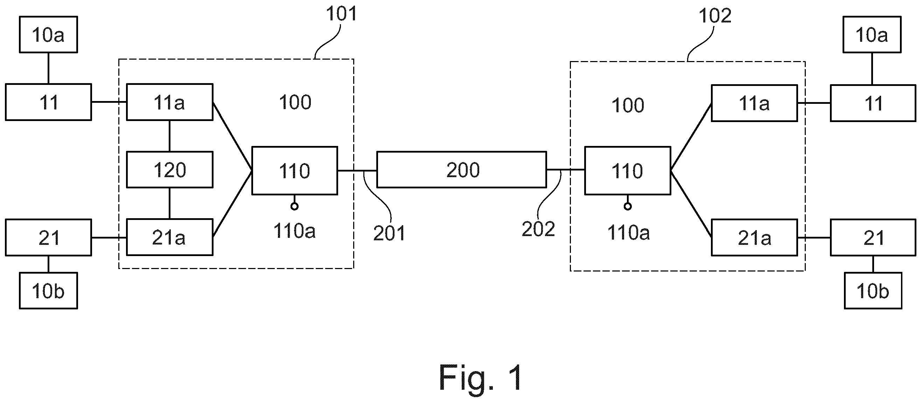

Fig. 1 discloses a schematic block diagram of a power supply grid system according to the invention. The power supply grid system 1 comprises a first substation 101, which is coupled to a second substation 102 via a transmission line 200. The first substation 101 comprises a terminal 100, which comprises an AC interface 11a, which is coupled via an AC bus bar 11 to an AC grid 10a and a DC interface 21a, which is coupled via a DC bus bar 21 to a DC grid 10b. The terminal 100 furthermore comprises a switch unit 110, and a converter unit 120 which is able to perform a AC-Dc conversion or a DC-AC conversion. The second substation 102 comprises a terminal 100 which comprises an AC interface 11a, which is coupled to an AC bus bar 11 and a DC interface 21a, which is coupled to a DC bus bar 21. The terminal 100 also comprises a switch unit 110.

The terminal 100 of the first substation 101 is an active terminal 100 as it comprises a converter unit 120. The terminal 100 of the second substation 102 is a passive terminal as it does not comprise a converter unit.

The first and second substation 101, 102 can exchange energy via the transmission line 200 in both directions.

According to this embodiment, existing transmission lines (AC or DC transmission lines) are used by the terminals coupled to the transmission lines for an AC power transmission, a DC power transmission or a combination of both.

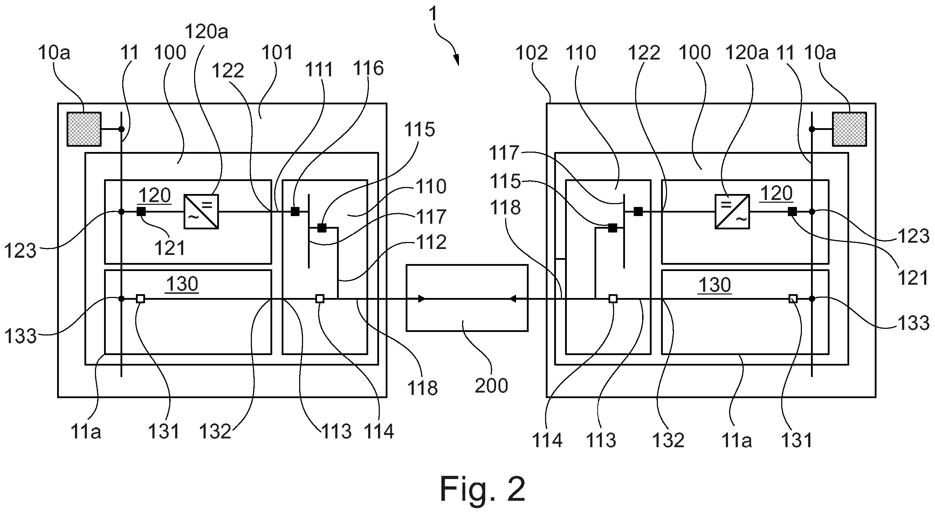

Fig. 2 discloses a schematic block diagram of a power supply grid system according to the invention. The power supply grid system 1 comprises a substation 101, 10 which is coupled to a substation 102 via a transmission line 200. The substation 101 comprises an AC bus bar 11, which is coupled to an AC supply grid 10a. The substation 101 comprises a terminal 100. The terminal 100 comprises a switch unit 110, a converter unit 120 and an AC connection unit 130 as AC interface 11a. The converter unit 120 comprises a converter 120a, and at least a first and second port 122, 123. The first port 122 is coupled to the switch unit 110. The second port 123 is coupled to the AC bus bar 11. A switch 121 is arranged at the second port 123.

The AC connection unit 130 as AC interface 11a comprises a first and second port 132, 133 as well as a switch 131. The first port 132 is coupled to the switch unit 110 and the second port 133 is coupled to the AC bus bar 11. At the second port 133 a switch 131 is provided. The AC connection unit 130 or the AC interface 11a can thus couple the AC bus bar 11 to the transmission line 200 to transmit AC power.

The switch unit 110 comprises a first, second and third port 111, 113, 118. The first port 111 is coupled to the first port 122 of the converter. The second port 113 is coupled to the first port 132 of the AC connection unit 130 or the AC interface 11a. The third port 118 is coupled to an end of the transmission line 120. The switch unit comprises three switches 116, 115, 114. The switch unit 110 may also comprise a DC bus bar 21 or may be coupled to a DC bus bar 21.

In Fig. 2, the switches 121, 116, 115 are switched on while the switches 131, 114 are switched off.

In all the figures, the switches are depicted as a rectangle. If the switch is switched off, the rectangle is white, while, if the switch is switched off, the rectangle is filled.

At the other end of the transmission line 200, a substation 102 is provided. It should be noted that energy can be exchanged between the substation 101 and substation 102 in either direction. The structure of substation 102 corresponds to the structure of substation 101. Hence, the converter unit 120 and the AC connection unit 130 (or the AC interface 11a) is coupled via the AC bus bar 11 to an AC grid 10a.

The switch unit 110 is used to either connect the output of the converter unit 120 or the AC connection unit 130 to the transmission lines 200. If the output of the converter 120 is coupled to the transmission line 200, then DC power is transmitted over the AC lines 200. In contrast, when the AC connection unit 130 is coupled to the transmission line 200, an AC power is transmitted via the (AC) transmission lines 200.

Accordingly, Fig. 2 shows a representation of a basic module of a multi-mode transmission line. A multi-mode transmission line relates to two terminals which are coupled by a transmission line. In Fig. 1 the DC operating mode is depicted with the shown switching status of the respective switches.

According to this embodiment, existing transmission lines (AC or DC transmission lines) are used by the terminals coupled to the transmission lines for an AC power transmission, a DC power transmission or a combination of both.

In Fig. 2 the terminal 100 comprises the switch unit 110, the converter 120 and the AC interface 11a (AC connection unit 130). In other words, the terminal does not comprise a DC interface, as DC power is supplied at the output of the converter 120.

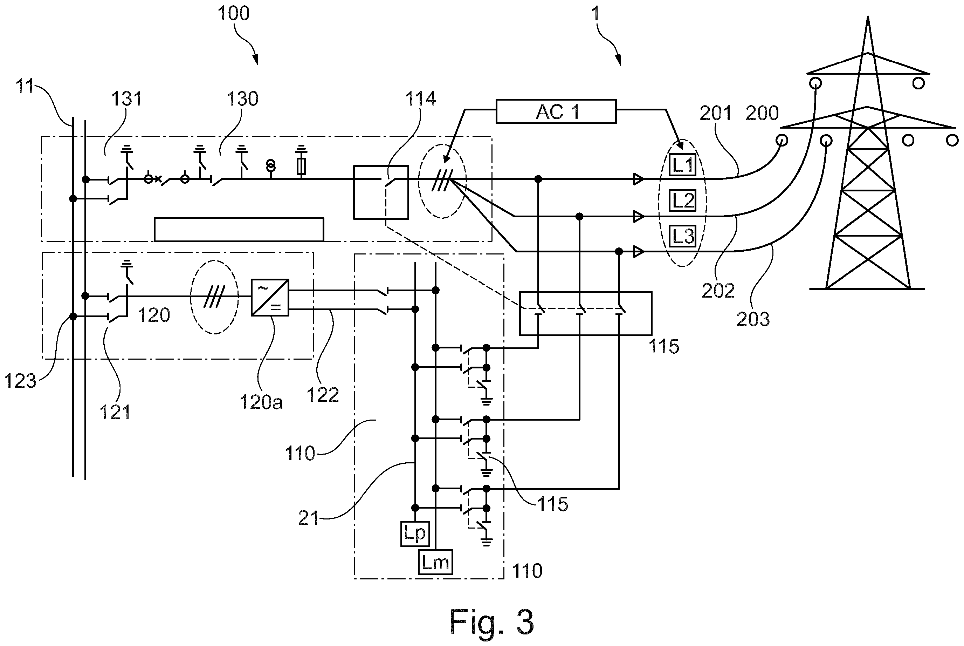

Fig. 3 shows a further schematic representation of a power supply grid system according to the invention. In Fig. 3, a substation of Fig. 2 is depicted in more detail. The terminal 100 comprises the switch unit 110, the converter unit 120 and the AC connection unit 130 as AC interface 11a. The AC connection unit 130 as AC interface 11a as well as the converter unit 120 are coupled to the AC bus bar 11. The switch unit 110 comprises the switches 114 coupled between the AC connection unit 130 and the transmission line 200 as well as a switch 115 coupled between the DC bus bar 21 and the AC transmission line 200. The converter 120 comprises a switch 121 which is coupled via the second port 123 to the AC bus bar 11. The converter unit 120 comprises a converter 120a which can convert AC to DC or DC to AC.

By means of the switch unit 110, either the AC connection unit 130 is coupled via the switch 114 to the AC transmission line 200 or the DC bus bar 21 is coupled via the switch 115 to the AC transmission line 200The DC interface 21a is here implemented as part of the switches 115.

In Fig. 3 an equivalent circuit diagram of an active terminal of a multi-mode transmission line is shown. In particular, the interfaces (AC bus bar 11, DC bus bar 21), the switch unit 110, and the converter 120 are depicted. The converter 120 is used for a power exchange between AC subsystems and DC subsystems. The original interface for the AC subsystem can remain unchanged. Only the switch unit 110, the DC bus bar 21 and the converter unit 120 are added for a terminal according to the invention. The terminal according to the invention is advantageous as the existing AC infrastructure can be reused. Moreover, by means of the switch unit a AC operating mode, a DC operating mode or a combined operating mode can be provided by simple switching operations.

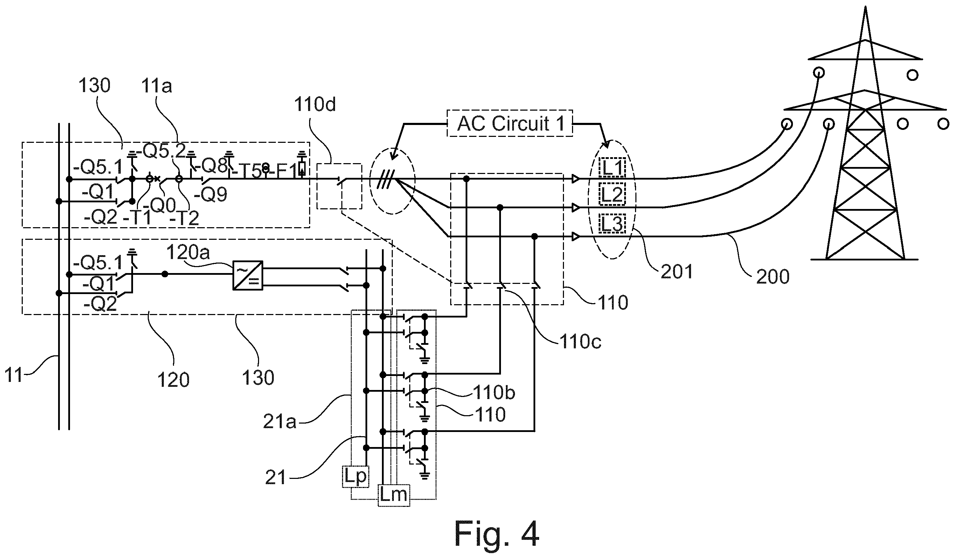

Fig. 4 shows a further schematic representation of a power supply grid system according to the invention. The power supply grid system according to Fig. 4 substantially corresponds to the power grid supply system of Fig. 3. Hence, the grid supply system comprises an AC interface 11a, 130, a DC interfaces or DC bus bar 21, the switch unit 110, and the converter 120. The switch unit 110 comprises a number of switches or groups of switches 101b, 110c, 110d. The switches 110b are coupled with the DC bus bar 21. The switches 110c are coupled between the switches 110b and the transmission line 200. The switch 110d is coupled between the AC interface 11a and the transmission line 200. Hence, the switches 110d and the switches 110c are used to couple the AC interface 11a or the DC interface 21 to the transmission line 200 and in particular the phases L1, L2, L3 of the transmission line 200.

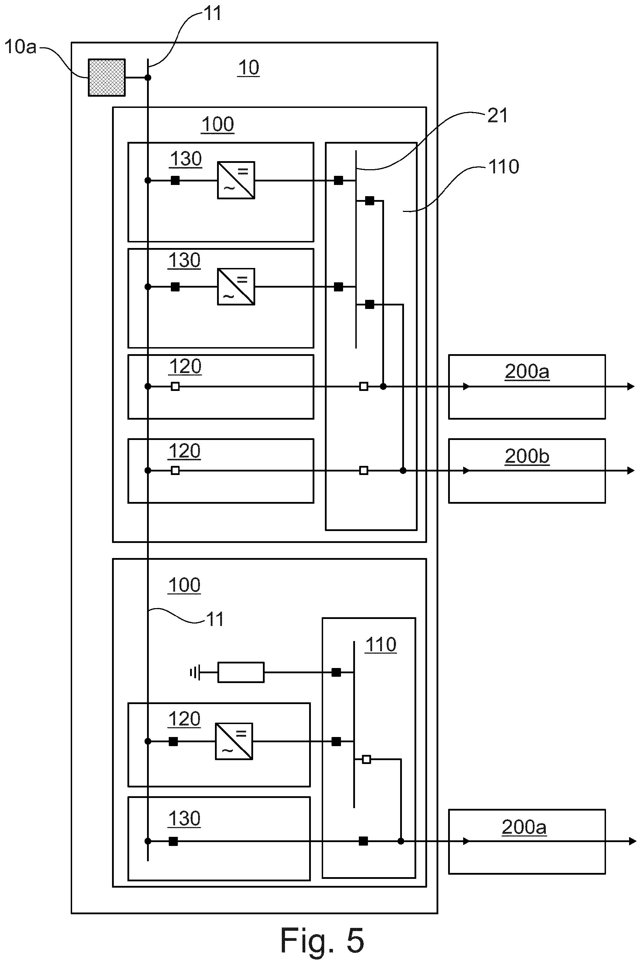

Fig. 5 shows a block diagram of a substation of a power supply grid system according to the invention. While in Fig. 2, each substation comprises one terminal, the substation A in Fig. 5 comprises two terminals, namely terminal A, terminal B, wherein each terminal is coupled on one end to the AC bus bar 11 (and via the AC bus bar 11 to an AC grid 10a) and on the other hand to a transmission line 200. The first terminal A, 100 comprises two converter units 130 as well as two AC connection units 120. The switch unit 110 is coupled to the two converter units 130 as well as to the two connection units 120. The switch 110 unit can couple the two converter units 130 to the first and second transmission lines 200a, 200b. Alternatively, the switch unit 110 can couple the two AC connection units 120 to the first and second transmission lines 200a, 200b.

The second terminal 100 is also coupled to the AC bus bar 11. The second terminal 100 also comprises the switch unit 110, the converter unit 120 and the AC connection unit 130. The switch unit is adapted to either couple the converter unit 120 or the AC connection unit 130 to the transmission line 200a.

In Fig. 5 the coupling of a multi-mode transmission line is shown in a network node such as substation. Different terminals are provided in the substation and are coupled via their AC connection units 120 to the substation 10. In Fig. 5 the terminals are coupled to transmission lines 200a, 200b. Each transmission line 200a, 200b can contain an electrical circuit for transmitting power. Hence, two electrical circuits are coupled to the terminal 100 according to this embodiment. It should be noted that other embodiments with other configurations of electrical circuits are possible in order to optimize the topology of the power supply grid.

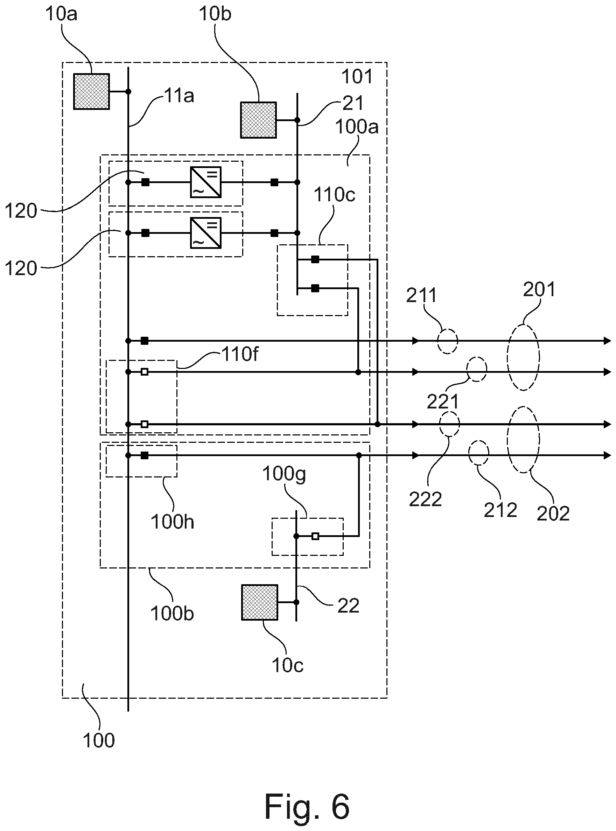

Fig. 6 shows a block diagram of a substation of a power supply grid system according to the invention. The substation 101 comprises a first and second terminal 100a, 100b and is coupled to an AC bus bar 11 (and via the AC bus bar 11 to the AC grid 10a) and a DC bus bar 21 (and via the DC bus bar 21 to the DC grid 10b). The transmission line 200 comprises a line 201 with two circuits 211, 221 and a line 202 with two circuits 212, 222.

The first terminal 100a comprises at least one, preferably two converter units 120 which are coupled between the AC bus bar 11 and the DC bus bar 21. Hence, the first terminal is an active terminal. Furthermore, a switch unit 110 comprises the switches 110e coupled between the output of the converter units 130 and the transmission line 201 and a switch 100f between the AC bus bar 11 and the transmission line 201. Accordingly, the switch unit 110 can coupled the AC bus bar 11 or the DC bus bar or a combination of both to the transmission line 201.

The second terminal 100b does not comprise a converter units and is therefore a passive terminal. Furthermore, a switch unit 110 comprises the switches 110g coupled between the DC bus bar 22 (which is coupled to the DC grid 10c) and the transmission line 201 and a switch 100h between the AC bus bar 11 and the transmission line 201. Accordingly, the switch unit 110 can couple the AC bus bar 11 or the DC bus bar 22 or a combination of both to the transmission line 201.

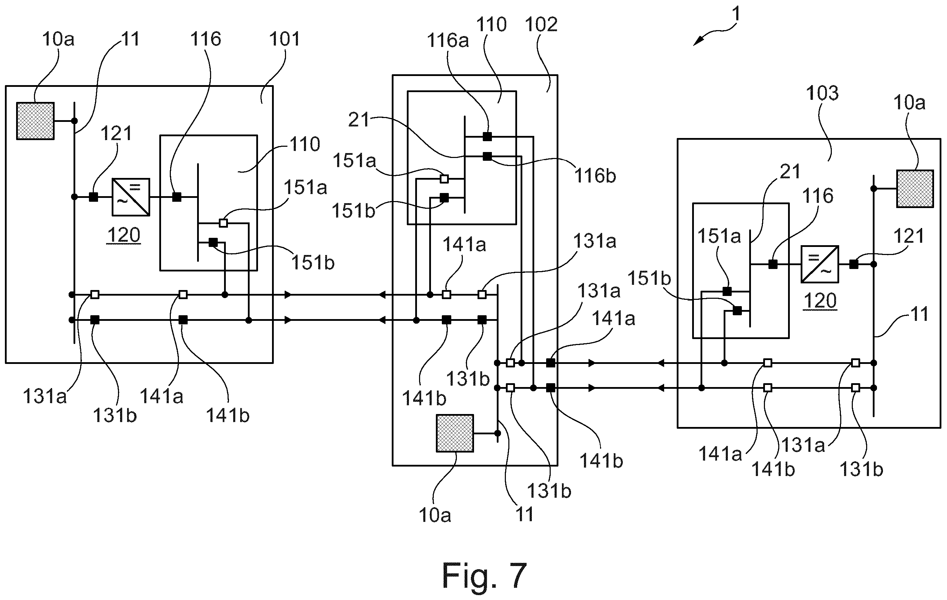

Fig. 7 shows a schematic representation of a power supply grid system according to the invention. The power supply grid system of Fig. 7 comprises three substations 101, 102, 103. The first substation 101 is coupled via AC transmission lines to the substation 102 which in turn is coupled via AC transmission lines to the third substation 103. Each substation 101, 102, 103 comprises an AC bus bar and a switch unit 110. In the embodiment of Fig. 7, the second substation 10b is passive and no energy is exchanged between the AC bus bar 11 and the DC bus bar 21. The power supply grid system according to Fig. 7 relates to a single transmission line topology. The AC bus bars 11 are coupled to the AC grids 10a.

In the first substation 101, the switches 121, 116, 151b, 131b, 141b are switched on. The other switches 151a, 131a, 141a are not switched on. The same applies to the switches in the second substation 102. In the third substation 103, the switches 151a, 151b, 116 and 121 are switched on, i.e. those switches connecting the AC transmission lines 200 to the AC bus bar 11 via the converter 120. The switches 141, 141b, 131, 131b are switched off.

In Fig. 7 a single transmission line topology is depicted. Here, an AC transmission is possible between the substations 101 and 102 and a DC transmission between the substations 102 and 103. Moreover, a DC transmission between the substation 102 and the substation 103 is possible.

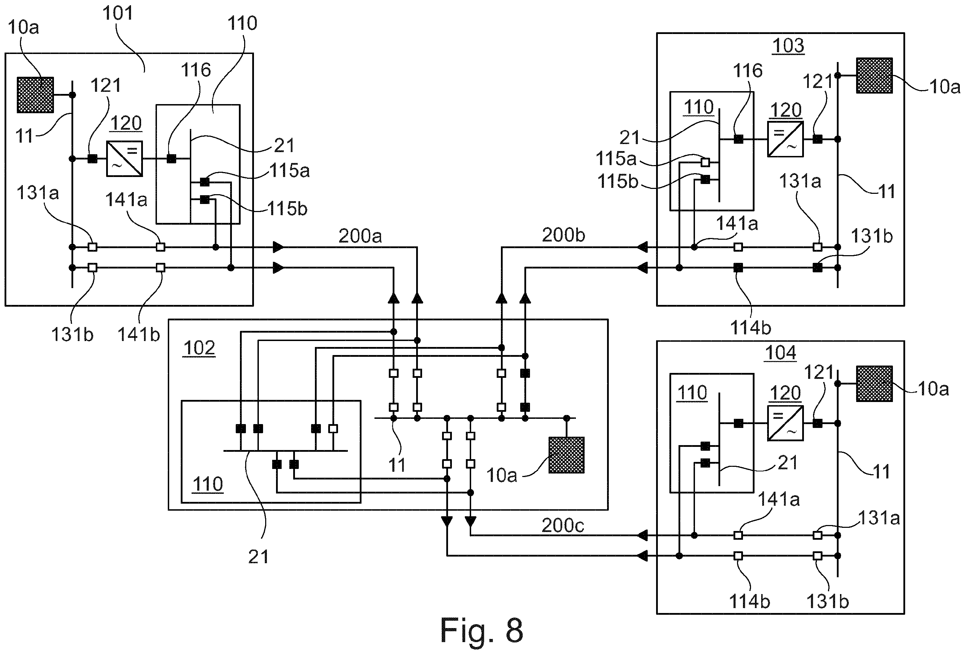

Fig. 8 shows a schematic representation of the power supply grid system according to the invention. In Fig. 8, a power supply grid system with four substations 101 - 104 are shown. The first, third and fourth substations 101, 103, 104 correspond to the substations according to Fig. 2. Hence, each substation comprises an AC bus bar 11 and is coupled via the AC bus bar 11 to the AC grid 10a. Each switch unit 110 comprises a DC bus bar 21. Each of these three substations comprises a converter 120 and switches 121, 116, 115a, 115b, 131a, 131b, 141a, 141b. In the first substation 10a, the switches 121, 116, 115a, 115b are switched on.

Thus the DC output of the converter 120 is coupled to the DC bus bar 21 and the DC bus bar 21 is coupled to the transmission lines. According to the embodiment of Fig. 5, different grids can be coupled with the power supply grid system.

The second substation 102 also comprises a switch unit 110 with a DC bus bar 21. Furthermore, the substation 102 comprises an AC bus bar 11. The second substation and the respective terminal does not need to have a converter 120. In the second substation 102, three transmission lines 200a, 200b, 200c are coupled to the second substation 102. The terminals in the substations 101 - 104 are switched such that the DC bus bar 21 of the first substation 101 is coupled to the DC bus bar 21 of the switch unit 110 in the second substation 102. This bus bar 21 is also coupled to the substation 104 via the third transmission line 200c to the DC bus bar 21 of the switch unit 110 of the fourth substation 104.

In Fig. 8 a coupling of a multi-mode transmission line is depicted. In particular, a multi terminal topology is shown. Accordingly, different grids can be coupled and synchronous grids can be uncoupled.

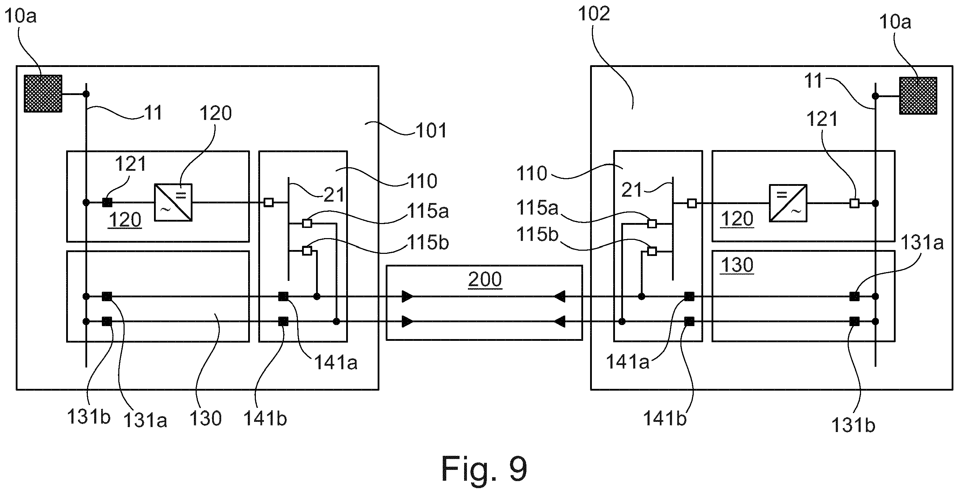

Fig. 9 shows a further schematic representation of the power supply grid system according to the invention. In Fig. 9, the power supply grid system is depicted which is in an AC operation mode. A substation 101 is coupled via the transmission lines 200 to a substation 102. Each substation 101, 102 comprises a terminal 100 which in turn comprises a converter unit 120, an AC connection unit 130 and a switch unit 110. The switch unit, the AC connection unit and the converter units according to Fig. 9 correspond to the switch unit 110, converter unit 120 and AC connection unit 130 according to Fig. 1, 2 or 3. To allow an AC operation mode, the switches 121, 131a, 132b, 141a, 141b in the substation 101 as well as the switches 141a, 141b, 131a, 131b in the terminal 100 of the substation 102 are closed while the other switches are open.

The AC operation mode is also a fall back operation mode if the DC system is in maintenance or when there is a disturbance in the DC system.

According to an aspect of the invention, in the AC operation mode, the switch 121 of the converter unit 120 of the substation B can be switched off. Alternatively, as in the substation A, the switch 121 can be turned off. If the switch 121 is turned off, the converter can be used to support the AC grid. This can be performed for example by active power balancing, reactive power balancing or oscillation damping.

The substations 101, 102 are coupled via AC bus bars 11 to an AC grid 10a.

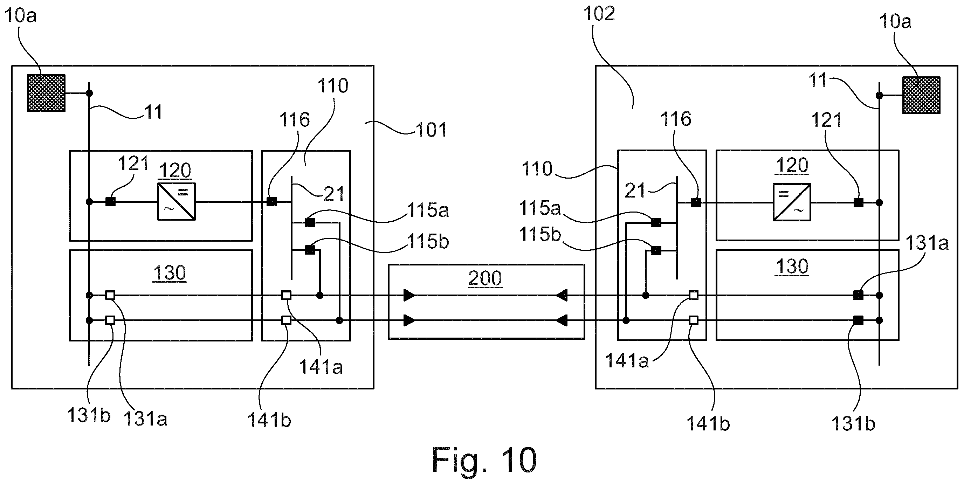

Fig. 10 shows a schematic representation of a power supply grid system according to the invention. In Fig. 10, the power supply grid system is depicted in a DC operation mode. The grid system comprises a substation 101 coupled via a transmission line 200 to a substation 102. The substations 101, 102 are coupled via an AC bus bar 11 to the AC grid. Here, the converter unit 120 is actively coupled between the AC bus bar 11 and the switch unit 110. As the switches 116, 115a, 115b are closed, the output of the converter unit 120 is coupled to the AC transmission line 200. In substation 102, the switches 115a, 115b, 116 and 121 are closed such that the end of the AC transmission line 200 is coupled to the AC bus bar 11 via the switch unit 110 and the converter 120. The DC connection path, i.e. the path for transmitting DC power, is from the converter 120 in the substation 101, via the switch unit 120, the AC transmission lines, the lines 200, the switch unit 110 in the substation 102 and the converter 120 in the substation 102. With the DC power transmission, the overall efficiency of the power supply grid system can be improved.

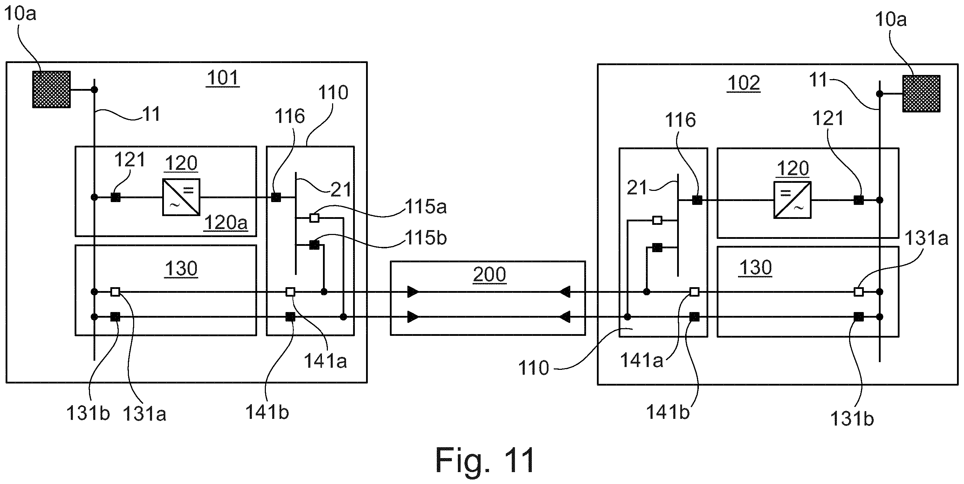

Fig. 11 shows a schematic representation of a power supply grid system according to the invention. In Fig. 11, a combined AC and DC operation mode is depicted. In other words, according to this operation mode, DC as well as AC power can be transmitted. Furthermore, by switching on or off of the DC operation mode, a synchronous grid can be achieved.

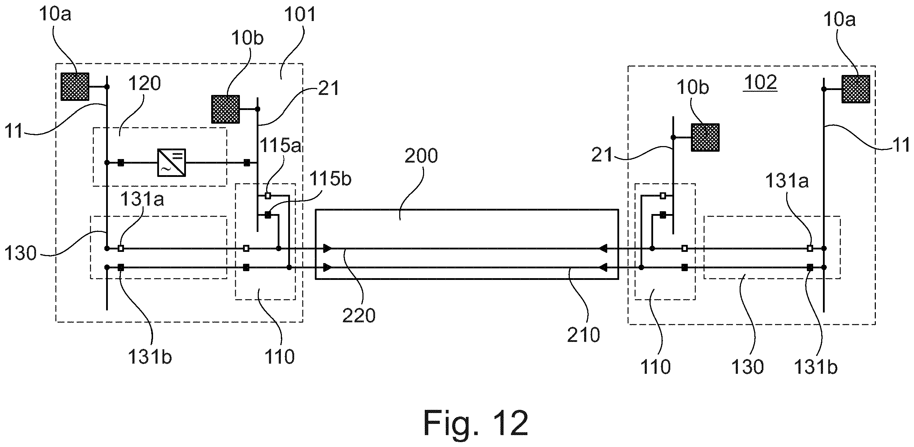

Fig. 12 shows a schematic representation of a power supply grid system in a combined AC and DC operating mode according to the invention. A first and second substation 101, 102 are coupled via a transmission line 200, which comprises a first and second circuit 210, 220. The first and second substations are each coupled via an AC bus bar 11 to an AC grid 10a and via a DC bus bar 21 to a DC grid 10b. The first and second substation 101, 102 allow a power transmission in a combined AC and DC mode. The transmission line can be a DC transmission line. Each terminal 100 in the first and second substation 101, 102 comprise a switch unit 110. The switch unit 110 in the first substation 101 comprises a switches 115a, 115b. The terminal in the first substation 101 is coupled to the AC bus bar 11 and an Dc bus bar 21. The terminal comprises a converter unit 120 between the AC bus bar 11 and the DC bus bar 21. An AC interface is provided in form of an AC connection unit 130, which comprises two switches 131a, 131b.

The second substation 102 comprises a passive terminal with a switch unit 110, and an AC connection unit 130 having switches 131a, 131b. The terminal 100 is coupled to a second AC bus bar 12 and a second DC bus bar 22.

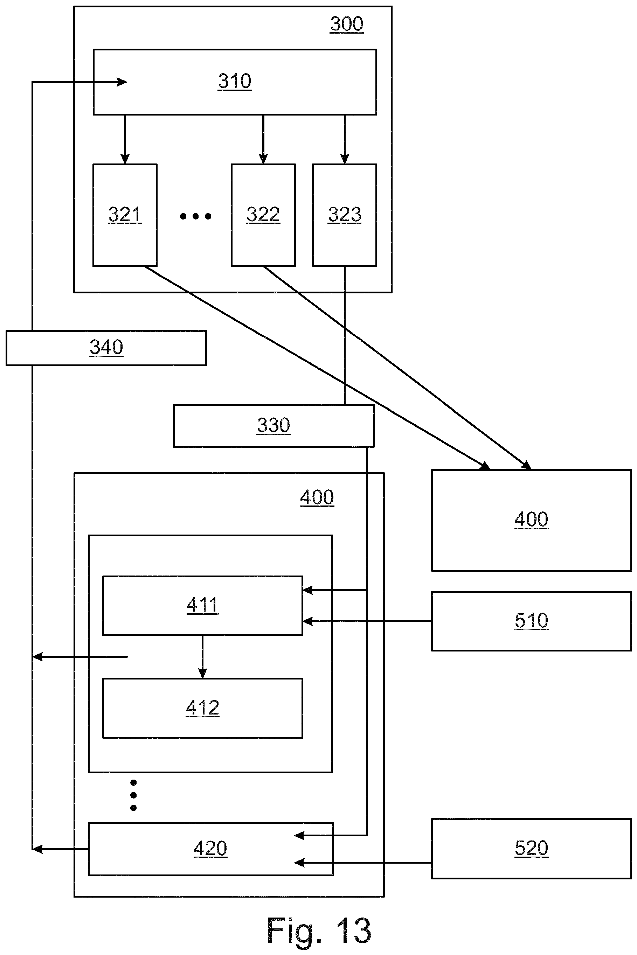

Fig. 13 shows a schematic representation of a control of a power supply grid system according to the invention. The control of the power supply grid system comprises a grid control system 300 and terminal control systems 400. The grid control system 300 comprises a primary grid operational unit 310 as well as a number of multi-mode transmission line units 321, 322, 323 which each control a multi-mode transmission line. In turn, the primary grid operation unit 310 performs the overall grid control. A multi-mode transmission line control unit 323 is forwarding set points 330 for the terminals of a first multi-mode transmission line to a terminal control system 400 of a multi-mode transmission line. The terminal control system 400 comprises a first terminal control unit 410 having a system characteristic unit 411 defining the system characteristics of a first terminal. Furthermore, a module terminal unit 412 can be provided which provides modules for the terminals in a substation. The terminal control unit 400 may comprise different control units for each terminal in a substation.

Measured values 510 in a substation can be provided to the system characteristic unit 410 together with the set points determined by the multi-mode transmission line control unit 321 - 323.

According to an aspect of the invention the control of the grid system is divided into two levels. The first level being the centralized grid control system 500 and the second level being the distributed terminal control system 400. The grid control system 300 is responsible for higher level grid functions.

The control system according to the invention is used to define the operating parameters of the terminals in the grid operation system. This can include the topology of the grid system, switching sequences of the terminals, maximum transmission capacity etc. Reference values or set points are transferred to the terminals in the grid operating system. These set points may include switching commands, a DC voltage, AC power balancing, etc. The terminal control unit 400 can be used to control the operational management and the protection of the terminals 100.

The terminal control unit 400 allows an independent control of the terminals 100. The control is based on the measured values 510 and the set points 330 provided by the grid control system 300. This allows a fast and direct control of the terminals 100. The control of the terminals can be performed based on the state of the supply grid. The system characteristics unit 412 may comprise the functionality of the modular terminals 110.

The terminal control unit 400 serves for forwarding and implementing the control commands of the grid control system 300. The terminal control unit 400 may be different from a control unit of the terminal controlling the operation of the terminal 100.

The grid control system 300 can be implemented at a central location e.g. in or at a SCADA system. It serves to control the multi-mode transmission lines by defining a multi-mode transmission line (e.g. which transmission lines are coupled by which terminals; the number of terminals and the number of transmission lines are defined). The definition of a multi-mode transmission line can be performed on a software base and can be implemented in the SCADA system of the supply grid system. The grid control system 300 can determine the operating mode (AC transmission, DC transmission or a combination of AC and Dc transmission) of each terminal 100 in the multi-mode transmission line.

A multi-mode transmission grid MMG may comprise a number of multi-mode transmission lines. The grid control system is able to provide all high level grid control functions for controlling the plurality of multi-mode transmission lines of a multi-mode grid system MMG. Moreover, the grid control system 300 can perform load flow optimisation, power balancing, grid protection and wide array monitoring.

According to an aspect of the invention, a subsystem of a power supply grid system is provided in form of a multi-mode transmission line which is used to transmit electrical energy. The transmission can be performed in three different operation modes, namely an AC transmission, a DC transmission and a combined AC and DC transmission. The different operation modes can be changed during operation by switching operations. The different subsystems according to the invention (multi-mode transmission lines MML) can be combined to a multi-mode transmission grid. Each subsystem comprises interfaces to the existing power supply grid. With the interfaces, the subsystem (multi-mode transmission line system) can be coupled to DC subsystems or AC subsystems. By controlling the operational modes (AC mode, DC mode and combined AC and DC mode), the transmission capacity and the network topology can be actively controlled. With such a multi-mode transmission grid, it is possible to continuously extend such a grid system and to adapt the grid system to the requirements of the power supply grid.

The terminal of the multi-mode transmission line system can correspond to the terminal 100 as described in the above embodiments.

The terminal can be embodied as an active or passive terminal. If the terminal is merely a passive terminal, then no converter unit 120 is required.

The control of the multi-mode transmission line system according to this invention can be performed as the control of the power supply grid system is described with reference to Fig. 13.

## Claims

1. A power supply grid system (1), comprising
at least one first transmission line (200), having a first and second end (201, 202),
at least two terminals (100) each having a first port,
wherein the first ports are coupled to the first (201) or second (202) ends of the at least one first transmission line (200),
wherein at least one terminal (100) comprises an AC interface (11a) adapted to couple the terminal (100) to an AC grid (10a) or AC bus bar (11), a DC interface (21a) adapted to couple the terminal (100) to a DC grid (10b) or DC bus bar (21), and at least one switch unit (110) coupled to the at least one first transmission line (200),
wherein the switch unit (110) comprises a control input (110a) adapted to receive control commands,
wherein the switch unit (110) is adapted to couple based on the control commands received via the control input (110a), the AC interface (11a) and the DC interface (21a) to the at least one first transmission line (200) such that a combination of DC and AC power is transmitted over the at least one first transmission line (200),
**characterised in that** the switch unit (110) is also adapted to couple based on the control commands received via the control input (110a) the AC interface (11a) or the DC interface (21a) to the at least one first transmission line (200) such that DC power is transmitted or AC power is transmitted over the at least one first transmission line (200),
wherein the arrangement of at least two terminals (100) and a transmission line (200) is a multi-mode transmission line which is used to transmit electrical energy,
wherein the transmission by the multi-mode transmission line is performed in three different operation modes, namely an AC transmission, a DC transmission and a combined AC and DC transmission,
wherein the different operation modes are changeable during operation by switching operations.

2. Power supply grid system (1) according to claim 1, wherein
at least one terminal (100) further comprises a converter (120) adapted to convert AC to DC power or convert DC to AC power.

3. Power supply grid system (1) according to claim 1 or 2,
wherein at least one of the at least one first transmission line (200) is an AC or DC transmission line.

4. Power supply grid system (1) according to claim 1, 2 or 3, wherein
each transmission line (200) comprises at least two cable or wires when it is a DC transmission line and at least three cables or wires when it is an AC transmission line.

5. Power supply grid system (1) according to one of the claims 1 to 4, wherein
each transmission line (200) comprises at least one electrical circuit.

6. Terminal for a power supply grid system (100), comprising
a first port, which is adapted to be a first transmission line (200),
an AC interface (11a) adapted to couple the terminal (100) to an AC grid (10a) or AC bus bar (11),
a DC interface (21a) adapted to couple the terminal (100) to a DC grid (10b) or DC bus bar (21),
at least one switch unit (110), wherein the switch unit (110) comprises a control input (110a) adapted to receive control commands,
wherein the switch unit (110) is adapted to couple based on the control commands received via the control input (110a), the AC interface (11a) and the DC interface (21a) to the at least one first transmission line (200) such that a combination of DC and AC power is transmitted over the at least one first transmission line (200),
**characterised in that** the switch unit (110) is also adapted to couple based on the control commands received via the control input (110a) the AC interface (11a) or the DC interface (21a) to the at least one first transmission line (200) such that DC power is transmitted or AC power is transmitted over the at least one first transmission lines (200)
wherein by means of the switch unit (110) an AC operating mode, a DC operating mode or a combined operating mode is provided by switching operations.

7. Terminal for a power supply grid system (100) according to claim 6, further comprising a converter unit (120) which is configured to be coupled to a AC bus bar (11).

8. Method of controlling a power supply grid according to any one of the claim 1 to 5, comprising the steps of
performing primary grid operational control in a grid control system (300) by determining set points for terminals (100) in the power supply grid,
controlling terminals (100) in the power supply grid based on the set point from the grid control system (300) and measured values of grid parameters,
**characterised in that** the control of the terminal (100) include selecting an AC operating mode, a DC operating mode or combined AC and DC operating mode which are implemented by controlling the switch units in the terminals (100) to couple the converter unit (120) or the AC connection unit (130) or both to the transmission line (200).

## Patentansprüche

1. Stromversorgungsnetzsystem (1), das Folgendes umfasst:
mindestens eine erste Übertragungsleitung (200), die ein erstes und ein zweites Ende (201, 202) hat,
mindestens zwei Terminals (100) mit jeweils einem ersten Anschluss,
wobei die ersten Anschlüsse mit dem ersten (201) oder zweiten (202) Ende der mindestens einen ersten Übertragungsleitung (200) gekoppelt sind,
wobei mindestens ein Terminal (100) eine Wechselstromschnittstelle (11a) aufweist, die dazu ausgelegt ist, das Terminal (100) mit einem Wechselstromnetz (10a) oder einer Wechselstromsammelschiene (11) zu koppeln, eine Gleichstromschnittstelle (21a), die dazu ausgelegt ist, das Terminal (100) mit einem Gleichstromnetz (10b) oder einer Gleichstromsammelschiene (21) zu koppeln, und mindestens eine Schalteinheit (110), die mit der mindestens einen ersten Übertragungsleitung (200) gekoppelt ist,
wobei die Schalteinheit (110) einen Steuereingang (110a) aufweist, der dazu ausgelegt ist, Steuerbefehle zu empfangen,
wobei die Schalteinheit (110) dazu ausgelegt ist, auf der Grundlage der über den Steuereingang (110a) empfangenen Steuerbefehle die Wechselstromschnittstelle (11a) und die Gleichstromschnittstelle (21a) mit der mindestens einen ersten Übertragungsleitung (200) zu koppeln, so dass eine Kombination aus Gleichstrom und Wechselstrom über die mindestens eine erste Übertragungsleitung (200) übertragen wird,
**dadurch gekennzeichnet, dass** die Schalteinheit (110) auch dazu ausgelegt ist, auf der Grundlage der über den Steuereingang (110a) empfangenen Steuerbefehle die Wechselstromschnittstelle (11a) oder die Gleichstromschnittstelle (21a) mit der mindestens einen ersten Übertragungsleitung (200) zu koppeln, so dass Gleichstrom oder Wechselstrom über die mindestens eine erste Übertragungsleitung (200) übertragen wird,
wobei die Anordnung aus mindestens zwei Terminals (100) und einer Übertragungsleitung (200) eine Multimode-Übertragungsleitung ist, die zur Übertragung elektrischer Energie verwendet wird,
wobei die Übertragung durch die Multimode-Übertragungsleitung in drei verschiedenen Betriebsarten erfolgt, nämlich einer Wechselstromübertragung, einer Gleichstromübertragung und einer kombinierten Wechsel- und Gleichstromübertragung,
wobei die verschiedenen Betriebsarten während des Betriebs durch Schaltvorgänge umschaltbar sind.

2. Stromversorgungsnetzsystem (1) nach Anspruch 1, wobei
mindestens ein Terminal (100) ferner einen Wandler (120) umfasst, der dazu ausgelegt ist, Wechselstrom in Gleichstrom oder Gleichstrom in Wechselstrom umzuwandeln.

3. Stromversorgungsnetzsystem (1) nach Anspruch 1 oder 2,
wobei mindestens eine der mindestens einen ersten Übertragungsleitung (200) eine Wechselstrom- oder Gleichstrom-Übertragungsleitung ist.

4. Stromversorgungsnetzsystem (1) nach Anspruch 1, 2 oder 3, wobei
jede Übertragungsleitung (200) mindestens zwei Kabel oder Drähte umfasst, wenn sie eine Gleichstrom-Übertragungsleitung ist, und mindestens drei Kabel oder Drähte, wenn sie eine Wechselstrom-Übertragungsleitung ist.

5. Stromversorgungsnetzsystem (1) nach einem der Ansprüche 1 bis 4, wobei
jede Übertragungsleitung (200) mindestens einen Stromkreis umfasst.

6. Terminal für ein Stromversorgungsnetzsystem (100), das Folgendes umfasst:
einen ersten Anschluss, der dazu ausgelegt ist, eine erste Übertragungsleitung (200) zu sein,
eine Wechselstromschnittstelle (11a), die dazu ausgelegt ist, das Terminal (100) mit einem Wechselstromnetz (10a) oder einer Wechselstromsammelschiene (11) zu koppeln,
eine Gleichstromschnittstelle (21a), die dazu ausgelegt ist, das Terminal (100) mit einem Gleichstromnetz (10b) oder einer Gleichstromsammelschiene (21) zu koppeln,
mindestens eine Schalteinheit (110), wobei die Schalteinheit (110) einen Steuereingang (110a) aufweist, der dazu ausgelegt ist, Steuerbefehle zu empfangen,
wobei die Schalteinheit (110) dazu ausgelegt ist, auf der Grundlage der über den Steuereingang (110a) empfangenen Steuerbefehle die Wechselstromschnittstelle (11a) und die Gleichstromschnittstelle (21a) mit der mindestens einen ersten Übertragungsleitung (200) zu koppeln, so dass eine Kombination aus Gleichstrom und Wechselstrom über die mindestens eine erste Übertragungsleitung (200) übertragen wird,
**dadurch gekennzeichnet, dass** die Schalteinheit (110) auch dazu ausgelegt ist, auf der Grundlage der über den Steuereingang (110a) empfangenen Steuerbefehle die Wechselstromschnittstelle (11a) oder die Gleichstromschnittstelle (21a) mit der mindestens einen ersten Übertragungsleitung (200) zu koppeln, so dass Gleichstrom oder Wechselstrom über die mindestens eine erste Übertragungsleitung (200) übertragen wird,
wobei, mittels der Schalteinheit (110), eine Wechselstrom-Betriebsart, eine Gleichstrom-Betriebsart oder eine kombinierte Betriebsart durch Schaltvorgänge bereitgestellt wird.

7. Terminal für ein Stromversorgungsnetzsystem (100) nach Anspruch 6, das ferner
eine Wandlereinheit (120) aufweist, die zur Kopplung mit einer Wechselstromsammelschiene (11) ausgebildet ist.

8. Verfahren zur Steuerung eines Stromversorgungsnetzes nach einem der Ansprüche 1 bis 5, das die folgenden Schritte umfasst:
Durchführen der primären Netzbetriebsregelung in einem Netzleitsystem (300) durch Ermittlung von Sollwerten für Terminals (100) im Stromversorgungsnetz,
Steuern von Terminals (100) im Stromversorgungsnetz auf der Grundlage des Sollwertes aus dem Netzleitsystem (300) und gemessener Werte von Netzparametern,
**dadurch gekennzeichnet, dass** die Steuerung des Terminals (100) die Auswahl einer Wechselstrom-Betriebsart, einer Gleichstrom-Betriebsart oder einer kombinierten Wechselstrom- und Gleichstrom-Betriebsart umfasst, die durch die Steuerung der Schalteinheiten in den Terminals (100) implementiert werden, um die Wandlereinheit (120) oder die Wechselstrom-Anschlusseinheit (130) oder beide mit der Übertragungsleitung (200) zu koppeln.

## Revendications

1. Système de réseau d'alimentation électrique (1), comprenant
au moins une première ligne de transmission (200), ayant une première et une seconde extrémité (201, 202),
au moins deux terminaux (100) ayant chacun un premier port,
dans lequel les premiers ports sont couplés aux premières (201) ou secondes (202) extrémités de ladite au moins une première ligne de transmission (200),
dans lequel au moins un terminal (100) comprend une interface AC (11a) conçue pour coupler le terminal (100) à un réseau AC (10a) ou à une barre omnibus AC (11), une interface DC (21a) conçue pour coupler le terminal (100) à un réseau DC (10b) ou à une barre omnibus DC (21), et au moins une unité de commutation (110) couplée à ladite au moins une première ligne de transmission (200),
dans lequel l'unité de commutation (110) comprend une entrée de commande (110a) conçue pour recevoir des ordres de commande,
dans lequel l'unité de commutation (110) est conçue pour coupler, sur la base des ordres de commande reçus par l'intermédiaire de l'entrée de commande (110a), l'interface AC (11a) et l'interface DC (21a) à ladite au moins une première ligne de transmission (200) de telle sorte qu'une combinaison de puissance DC et AC soit transmise sur ladite au moins une première ligne de transmission (200),
**caractérisé en ce que** l'unité de commutation (110) est également conçue pour coupler, sur la base des ordres de commande reçus par l'intermédiaire de l'entrée de commande (110a), l'interface AC (11a) ou l'interface DC (21a) à ladite au moins une première ligne de transmission (200) de telle sorte qu'une puissance DC soit transmise ou qu'une puissance AC soit transmise sur ladite au moins une première ligne de transmission (200), dans lequel l'agencement d'au moins deux terminaux (100) et d'une ligne de transmission (200) est une ligne de transmission multimode qui est utilisée pour transmettre de l'énergie électrique,
dans lequel la transmission par la ligne de transmission multimode s'effectue selon trois modes de fonctionnement différents, à savoir une transmission AC, une transmission DC et une transmission combinée AC et DC,
dans lequel les différents modes de fonctionnement peuvent être modifiés en cours de fonctionnement par des opérations de commutation.

2. Système de réseau d'alimentation électrique (1) selon la revendication 1, dans lequel
au moins un terminal (100) comprend en outre un convertisseur (120) conçu pour convertir une puissance AC en puissance DC ou pour convertir une puissance DC en puissance AC.

3. Système de réseau d'alimentation électrique (1) selon la revendication 1 ou 2,
dans lequel au moins l'une de ladite au moins une première ligne de transmission (200) est une ligne de transmission AC ou DC.

4. Système de réseau d'alimentation électrique (1) selon la revendication 1, 2 ou 3, dans lequel
chaque ligne de transmission (200) comprend au moins deux câbles ou conducteurs lorsqu'il s'agit d'une ligne de transmission DC et au moins trois câbles ou conducteurs lorsqu'il s'agit d'une ligne de transmission AC.

5. Système de réseau d'alimentation électrique (1) selon l'une des revendications 1 à 4, dans lequel
chaque ligne de transmission (200) comprend au moins un circuit électrique.

6. Terminal destiné à un système de réseau d'alimentation électrique (100), comprenant
un premier port, qui est conçu pour être une première ligne de transmission (200),
une interface AC (11a) conçue pour coupler le terminal (100) à un réseau AC (10a) ou à une barre omnibus AC (11), une interface DC (21a) conçue pour coupler le terminal (100) à un réseau DC (10b) ou à une barre omnibus DC (21), au moins une unité de commutation (110), dans lequel l'unité de commutation (110) comprend une entrée de commande (110a) conçue pour recevoir des ordres de commande,
dans lequel l'unité de commutation (110) est conçue pour coupler, sur la base des ordres de commande reçus par l'intermédiaire de l'entrée de commande (110a), l'interface AC (11a) et l'interface DC (21a) à ladite au moins une première ligne de transmission (200) de telle sorte qu'une combinaison de puissance DC et AC soit transmise sur ladite au moins une première ligne de transmission (200),
**caractérisé en ce que** l'unité de commutation (110) est également conçue pour coupler, sur la base des ordres de commande reçues par l'intermédiaire de l'entrée de commande (110a), l'interface AC (11a) ou l'interface DC (21a) à ladite au moins une première ligne de transmission (200) de telle sorte qu'une puissance DC soit transmise ou qu'une puissance AC soit transmise sur ladite au moins une première ligne de transmission (200), dans lequel l'unité de commutation (110) permet d'assurer un mode de fonctionnement AC, un mode de fonctionnement DC ou un mode de fonctionnement combiné par des opérations de commutation.

7. Terminal destiné à un système de réseau d'alimentation électrique (100) selon la revendication 6, comprenant en outre une unité de conversion (120) qui est configurée pour être couplée à une barre omnibus AC (11).

8. Procédé de commande d'un réseau d'alimentation électrique selon l'une quelconque des revendications 1 à 5, comprenant les étapes consistant à
effectuer une commande de fonctionnement de réseau primaire dans un système de commande de réseau (300) en déterminant des points de consigne pour des terminaux (100) dans le réseau d'alimentation électrique,
commander des terminaux (100) dans le réseau d'alimentation électrique sur la base du point de consigne provenant du système de commande de réseau (300) et de valeurs mesurées de paramètres de réseau,
**caractérisé en ce que** la commande du terminal (100) comprend la sélection d'un mode de fonctionnement AC, d'un mode de fonctionnement DC ou d'un mode de fonctionnement combiné AC et DC, qui sont mis en œuvre en commandant les unités de commutation dans les terminaux (100) de manière à coupler l'unité de conversion (120) ou l'unité de connexion AC (130), ou les deux, à la ligne de transmission (200).
